# FASCICULE DE BREVET EUROPEEN

(11) **EP 3 457 981 B1**
(45) Date de publication et mention de la délivrance du brevet: **08.09.2021**
(21) Numéro de dépôt: 17722828.5
(22) Date de dépôt: 16.05.2017
(51) Int. Cl.: A61C 7/20, A61C 7/12

(54) **RUBAN ORTHODONTIQUE A MEMOIRE DE FORME**
ORTHODONTISCHES FORMGEDÄCHTNISBAND
ORTHODONTIC SHAPE MEMORY BAND

(30) Priorité: 18.05.2016 FR 1654422
(43) Date de publication de la demande: 27.03.2019
(73) Titulaire: D&D, 75011 Paris (FR)
(72) Inventeur: BENAROUCH, Dan, 75011 PARIS (FR); MAJBRUCH, Delphine, 75011 PARIS (FR)
(74) Mandataire: Nony
(86) Numéro de dépôt international: PCT/EP2017/061661
(87) Numéro de publication internationale: WO 2017/198640

(56) Documents cités:
- EP-A1- 2 423 338
- WO-A1-2011/036249
- CN-A- 101 559 006
- DE-A1-102015 009 345
- US-A- 5 683 245
- US-A1- 2005 003 318
- US-A1- 2005 181 332
- US-A1- 2005 277 083
- US-A1- 2011 270 583
- US-A1- 2011 311 932
- US-A1- 2014 234 527
- US-A1- 2016 058 527

## Description

### Domaine technique

L'invention concerne un appareil orthodontique à mémoire de forme, actif, semi-passif ou passif, et un procédé de conception d'un tel appareil.

### Etat de l'art

Un appareil orthodontique passif ou "attèle de contention" est un appareil destiné à maintenir en position les dents d'un patient, classiquement après un traitement orthodontique actif. US 2005/0181332 ou US2016058527 décrivent un tel appareil orthodontique.

Un appareil orthodontique passif présente l'inconvénient de maintenir les petits défauts au lieu de les corriger. En outre, si un aliment dur plie l'attèle au niveau inter-dentaire, l'attèle devient active et provoque une perte de l'alignement dentaire.

Un appareil orthodontique actif est un appareil destiné à déplacer des dents en malposition d'un patient.

L'appareil orthodontique le plus répandu, dit "multi-attaches", est composé de « *brackets »* collés sur les dents et dans lesquelles est introduit un arc. US2014234527A1 décrit la fabrication d'attaches par superposition de couches.

L'action des appareils orthodontiques actifs multi-attaches se traduit par un ensemble de forces exercées sur les dents, par l'intermédiaire des arcs, qui provoquent leur déplacement et leur alignement.

De manière générale, l'alignement est obtenu par l'action d'une séquence d'arcs qui ont des rôles spécifiques :
- arcs en alliage nickel / titane :
   - section ronde : alignement grâce à une succession d'arcs de section ronde croissante et nivellement des dents d'une même arcade ;
   - section rectangulaire : correction du grand axe des dents (ou torque) ;
- arcs à section rectangulaire en acier : correction du torque et des décalages inter-arcades par l'action d'élastiques intermaxillaires ;
- arcs à section rectangulaire en alliage TMA (Alliage de titane et de Molybdène): finition des mouvements dans tous les sens de l'espace.

WO2011036249A1 décrit un arc de travail orthodontique de forme anatomique dont la section transversale varie, en polyamide, qui peut comporter une âme de renfort en titane. US 2011/0311932 décrit un appareil orthodontique monobloc présentant des tronçons élargis pour la fixation aux dents.

Les matériaux à mémoire de forme sont largement utilisés en orthodontie. Ces matériaux sont en particulier décrits dans le Rapport « Alliages à mémoire de forme » - CARMA (CENTRE D'ANIMATION REGIONAL EN MATERIAUX AVANCES) - Actualisation décembre 2001, ou dans le document intitulé « Les alliages NIckel-Titane (NiTi) » par L. JORDAN, P. ROCHER, de la Société Francophone de Biomatériaux Dentaires (2009-2010). Il existe également une Norme AFNOR : « Alliages à mémoire de forme : Vocabulaire et mesures » (indice de classement : A 51-080.), avril 1991. US5683245A décrit un exemple d'arc orthodontique en un matériau à mémoire de forme.

Les alliages en acier offrent une rigidité à l'arc qui permet l'utilisation d'élastiques intermaxillaires sans effets parasites.

Les alliages en TMA permettent à l'orthodontiste de réaliser des plis de finitions avec des forces plus faibles qu'avec de l'acier, ce qui est mieux toléré par les patients.

L'utilisation quasi-standardisée de cette séquence d'arcs présente les inconvénients suivants :
- les premiers arcs de section ronde ne permettent pas un alignement dans tous les sens de l'espace, notamment pour les corrections de torque, ce qui rallonge la durée globale du traitement ;
- de nombreux rendez-vous chez l'orthodontiste sont nécessaires, notamment pour changer les arcs. A cette occasion, des douleurs sont souvent ressenties par les patients car une séquence d'arcs peut générer des forces discontinues ;
- risque de décollements de brackets ou de glissement d'arcs exposant les joues du patient à des lésions;
- acte répétitif, très routinier pour les orthodontistes ;
- nécessité de réaliser des plis de finition chronophages.

Il existe donc un besoin pour un appareil orthodontique ne présentant pas ces inconvénients.

Un but de l'invention est de répondre, au moins partiellement, à ce besoin.

### Résumé de l'invention

L'invention propose un appareil orthodontique selon la revendication 5.

Comme on le verra plus en détail dans la suite de la description, la modification de la section transversale le long du ruban permet avantageusement d'appliquer des forces dans plusieurs directions de l'espace dès le début du traitement. Ces forces peuvent être adaptées en fonction de la taille des racines des dents à déplacer. En conséquence, il est possible de raccourcir la durée des traitements et de limiter le nombre de rendez-vous chez l'orthodontiste.

De préférence, toutes les zones de collage présentent une forme sensiblement identique à celle d'une dent correspondante, c'est-à-dire sont faites « sur-mesure » et spécifiquement adaptées au patient.

En outre, la forme de la zone de collage permet au ruban à mémoire de forme d'être "directement" fixé sur les dents. Le traitement orthodontique en est avantageusement simplifié.

Enfin, le traitement peut être plus précis, ce qui permet de limiter les douleurs et les phénomènes de hyalinisation chez le patient.

Un appareil orthodontique selon l'invention peut encore présenter une ou plusieurs des caractéristiques optionnelles et préférées suivantes :
- la section transversale comporte des première et deuxième zones définies par un même matériau, les propriétés du matériau définissant la première zone étant différentes de celles du matériau définissant la deuxième zone ;
- lesdites propriétés différentes résultent d'un traitement thermique différent selon la zone considérée ;
- l'aire de la section transversale et/ou la composition du ou des matériaux définissant la section transversale et/ou les propriétés mécaniques du ou des matériaux définissant la section transversale est(sont) variable(s) en fonction de la position longitudinale de ladite section transversale ;
- la variation de la section transversale le long de la direction principale X est progressive sur plus de 1%, de préférence sur plus de 5%, de la longueur du ruban à mémoire de forme ;
- la variation de la section transversale comporte un amincissement ;
- au moins deux tronçons du ruban à mémoire de forme, représentant chacun plus de 5% de la longueur du ruban à mémoire de forme, présentent des sections transversales différentes de celles du (des) tronçon(s) adjacent(s) ;
- le ruban à mémoire de forme présente une section transversale qui varie progressivement, le long de la direction principale X, sur plus de 50%, de préférence plus de 60%, de préférence plus de 70%, de préférence plus de 80%, de préférence plus de 90%, de préférence sensiblement 100% de la longueur dudit ruban à mémoire de forme ;
- les tronçons inter-attaches du ruban à mémoire de forme présentent une section transversale qui varie progressivement, le long de la direction principale X, sur plus de 50%, de préférence plus de 60%, de préférence plus de 70%, de préférence plus de 80%, de préférence plus de 90%, de préférence sensiblement 100% de la longueur totale de l'ensemble des tronçons inter-attaches ;
- le ruban à mémoire de forme présente une section transversale qui varie progressivement, le long de la direction principale X, sur plus de 50%, de préférence plus de 60%, de préférence plus de 70%, de préférence plus de 80%, de préférence plus de 90%, de préférence sensiblement 100% de la longueur totale de l'ensemble de ses tronçons d'attaches ;
- le ruban à mémoire de forme comporte au moins une région en un matériau choisi dans le groupe formé par les alliages nickel-titane NiTi, CuAlZn et CuNiAl thermique, et les aciers ;
- l'appareil orthodontique comporte des tronçons d'attache et des tronçons inter-attaches, lesdits tronçons d'attache et tronçons inter-attaches se succédant le long de la direction principale du ruban à mémoire de forme et étant en un alliage NiTi ou en acier ; de préférence cependant, les tronçons d'attache et les tronçons inter-attaches sont en alliage à mémoire de forme, de préférence en le même alliage à mémoire de forme, ce qui facilite la fabrication et élimine les risques liés à la présence, dans la bouche, de deux métaux différents ;
- l'appareil orthodontique comporte des tronçons d'attache en un matériau sans mémoire de forme et des tronçons inter-attaches en un matériau à mémoire de forme, lesdits tronçons d'attache et tronçons inter-attaches se succédant le long de la direction principale du ruban à mémoire de forme ;
- l'appareil orthodontique comporte encore un renfort, de préférence en acier, et le ruban à mémoire de forme comporte une rainure dans laquelle le renfort peut être logé afin de stabiliser la forme dudit ruban à mémoire de forme ;
- chaque tronçon inter-attaches définit, au moins du côté qui n'est pas orienté vers les dents dans la position de service, une surface extérieure convexe dépourvue d'arête.

L'invention concerne également un procédé de fabrication d'un ruban d'un appareil orthodontique selon l'invention, ledit procédé étant selon la revendication 1.

Un procédé selon l'invention permet ainsi de fabriquer un appareil orthodontique dont la forme et l'action sont individualisées.

Un procédé selon l'invention peut encore présenter une ou plusieurs des caractéristiques optionnelles et préférées suivantes :
- ladite variation est relative
   aux propriétés du ou des matériaux qui définissent la section transversale ;

- à l'étape c), on fabrique un ruban à mémoire de forme dont aucun tronçon représentant plus de 2% ou plus de 1% de la longueur du ruban présente une section transversale constante ; l'adaptation de la section transversale à l'ensemble de forces à exercer localement est donc avantageusement très précise ;
- à l'étape c), on fabrique un ruban à mémoire de forme dont la section transversale, en particulier, de préférence, le contour de la section transversale, varie, de préférence progressivement, le long de la direction principale X dudit ruban à mémoire de forme, sur plus de 50%, de préférence plus de 60%, de préférence plus de 70%, de préférence plus de 80%, de préférence plus de 90%, de préférence sensiblement 100% de la longueur dudit ruban à mémoire de forme ;
- à l'étape c), on fait varier localement la section transversale locale d'un tronçon inter-attaches s'étendant entre des première et deuxième dites zones de collage successives le long de la direction principale X en fonction des forces à exercer, dans les trois dimensions de l'espace, sur des première et deuxième dents sur lesquelles lesdites première et deuxième zones de collage sont destinées à être collées, respectivement.

Dans un mode de réalisation, à l'étape c), on traite thermiquement une ou plusieurs régions du ruban à mémoire de forme afin de réduire localement les forces exercées sur les dents en position de service.

De préférence, à l'étape c), l'intensité (durée et/ou température) du traitement thermique d'une région du ruban à mémoire de forme dépend de la distance des dents à proximité de ladite région, dans la position de service, par rapport aux incisives dudit patient.

### Brève description des figures

D'autres caractéristiques et avantages de l'invention apparaîtront encore à la lecture de la description détaillée qui va suivre et à l'examen du dessin annexé dans lequel :
- les figures 1, 3 et 5 (5a-5c) représentent chacune une vue générale d'un appareil orthodontique selon l'invention, dans sa position de service (position dans laquelle l'appareil orthodontique exerce son action sur les dents) ;
- la figure 2a représente un exemple de direction principale X d'un appareil orthodontique selon l'invention et trois plans P1, P2 et P3 dans lesquels un ruban à mémoire de forme d'un appareil orthodontique selon l'invention a été sectionné pour les figures 2b à 2j ;
- les figures 2b-2j et 4 illustrent quelques exemples de variations de la section transversale d'un ruban à mémoire de forme le long de la direction principale X,
- la figure 6 représente schématiquement un exemple de ruban à mémoire de forme selon l'invention, comportant un renfort longitudinal ;
- la figure 7 (7a et 7b) illustre le fonctionnement d'un appareil orthodontique selon l'invention.

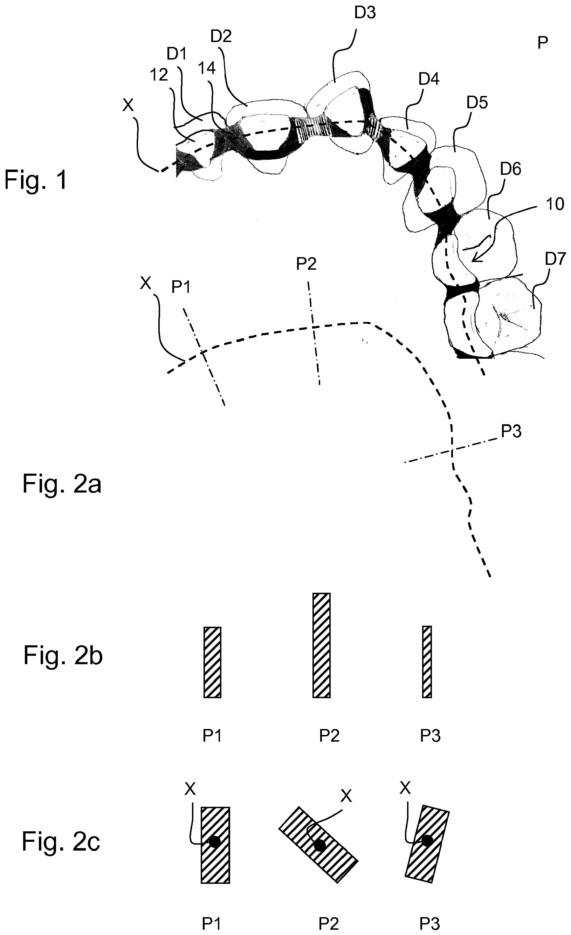

Sur chacune des figures 2b-2j, la forme de gauche représente la section dans le plan transversal P1 de la figure 2a, la forme centrale représente la section transversale dans le plan P2 et la forme de droite représente la section dans le plan P3.

Ces formes sont fournies à des fins illustratives. En pratique, les angles et les arêtes sont de préférence arrondies afin d'améliorer le confort.

Sur les différentes figures, des organes identiques ou analogues sont repérés par des références identiques.

### Définitions

Un "ruban" est une pièce dont la longueur est plus de 3 fois, de préférence plus de 5 fois supérieure à la plus grande largeur et/ou à la plus grande épaisseur. Le rapport entre la plus grande largeur et la plus grande épaisseur n'est pas limité.

La « longueur » est mesurée selon la direction principale X, de préférence courbe, du ruban à mémoire de forme.

Une « section transversale » est une section dans un plan perpendiculaire à la direction principale X.

Un « tronçon » du ruban à mémoire de forme est un segment de ce ruban délimité par deux sections transversales.

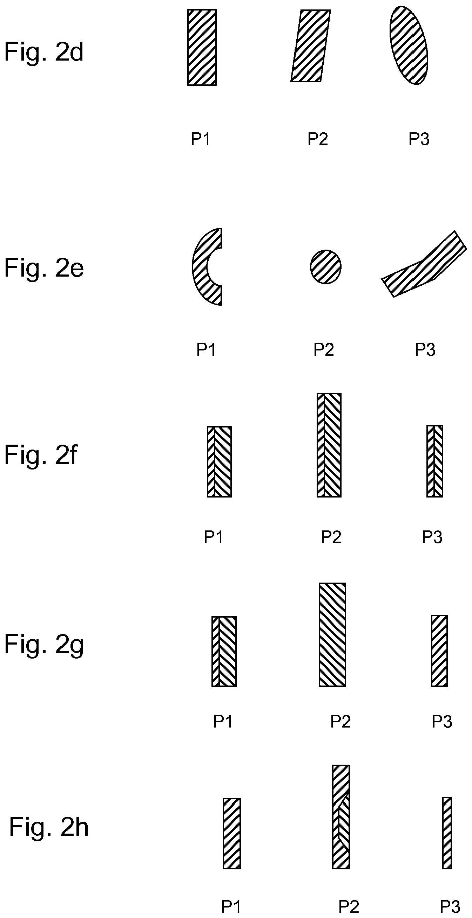

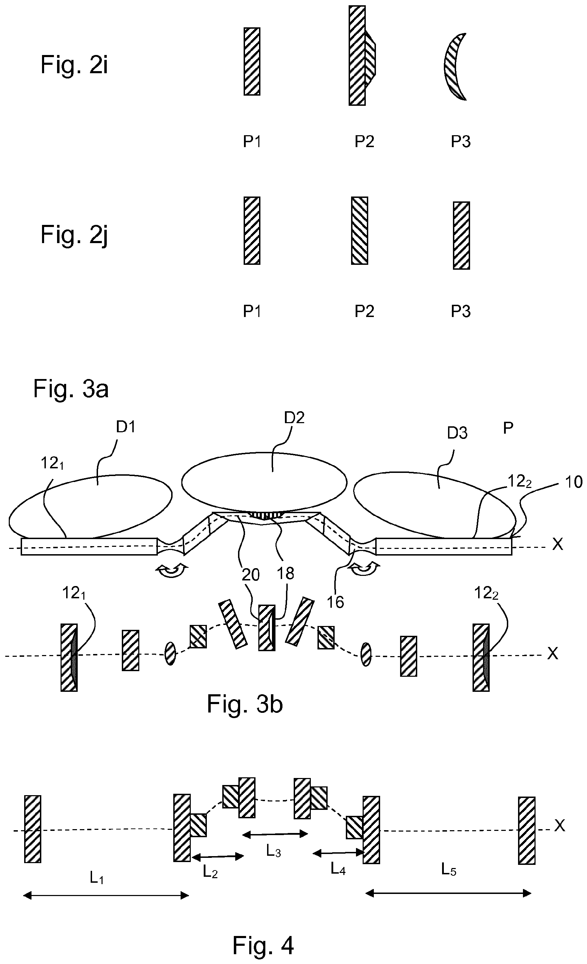

On appelle "profil de section transversale", une représentation graphique des sections transversales d'un ruban à mémoire de forme le long de la direction principale X, comme représenté sur les figures 2, 3b ou 4.

Une variation « progressive » ou « continue » est une variation sans à-coup, c'est-à-dire sans évolution brutale.

Le verbe « comporter » doit s'interpréter au sens large, non exclusif.

Par "orthodontiste", on entend tout professionnel intervenant dans un traitement orthodontique. On inclut ainsi le fabricant de l'appareil orthodontique, même s'il n'est pas diplômé d'orthodontie.

### Description détaillée

### Appareil orthodontique

La figure 1 représente un premier exemple d'appareil orthodontique selon l'invention constitué d'un ruban à mémoire de forme.

L'appareil orthodontique est monobloc, c'est-à-dire qu'il ne comporte qu'une seule pièce, à savoir le ruban à mémoire de forme.

Le ruban à mémoire de forme s'étend selon une direction principale, ou "axe" X, représentée en traits interrompus, de préférence sensiblement dans un plan général P (plan de la feuille sur la figure 1). Le ruban à mémoire de forme est de préférence conformé de manière que, dans la position de service, le plan général P soit sensiblement parallèle au plan d'occlusion.

Il est représenté dans une position de service dans laquelle il exerce une action pour déplacer des dents Dᵢ (i = 1..7) (référencées ci-après, de manière générique, par « D ») les unes par rapport aux autres.

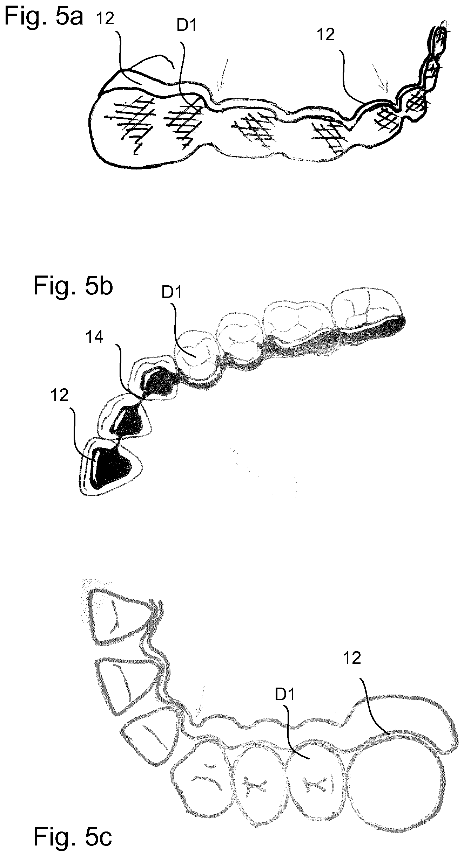

De préférence, comme représenté sur les figures 5a à 5c, au moins une, de préférence chacune des extrémités 10a et 10b du ruban à mémoire de forme présente des formes arrondies, de préférence dépourvues d'arêtes vives. En cas de décollement, les risques de blessure du patient sont donc limités.

Une méthode pour arrondir les formes est de tremper le ruban dans de l'acide pour émousser les arêtes.

Le long de la direction principale X, des tronçons d'attache 11 et des tronçons inter-attaches ou "ponts" 14 se succèdent.

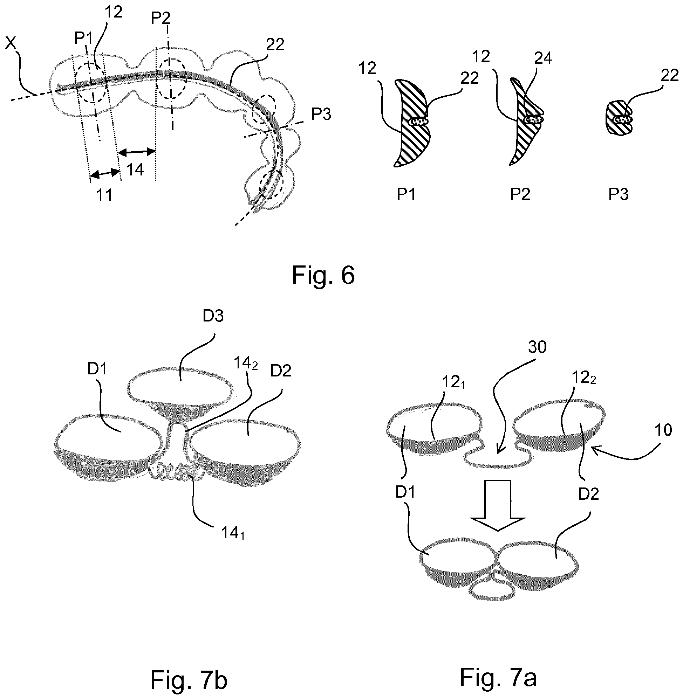

Un tronçon d'attache 11 est un tronçon du ruban à mémoire de forme qui comporte une zone de collage 12, ou « intrados des tronçons d'attache », destinée à la fixation du ruban à mémoire de forme sur les dents. Le long de la direction principale X, un tronçon d'attache 11 est délimité par les limites de la zone de collage 12 (figure 6).

Chaque zone de collage 12 est fixée, de préférence rigidement, « directement » sur une dent D, c'est-à-dire sans l'intermédiaire d'attaches, de préférence sur l'intrados des dents, c'est-à-dire sur la face linguale des dents, ce qui avantageusement rend invisible le ruban à mémoire de forme.

Le ruban à mémoire de forme peut être également collé sur la face vestibulaire des dents, notamment lorsque la situation clinique l'indique.

Le collage peut être en particulier effectué au moyen d'un composite de collage utilisé couramment en orthodontie, par exemple le Transbond XT (3M), le FUJI ORTHO LC, ou le RELIANCE chémopolymérisable.

Dans un mode de réalisation préféré, toutes les zones de collage sont conformées de manière à présenter une forme sensiblement identique à celle des dents D sur lesquelles elles sont destinées à être fixées. La détermination de cette forme peut résulter d'un scan tridimensionnel des dents du patient ou de mesures effectuées sur un modèle en plâtre des dents du patient, obtenu au moyen d'une empreinte. La forme des zones de collage est de préférence « individualisée », c'est-à-dire spécifiquement adaptée aux dimensions et à l'agencement des dents d'un patient particulier. L'efficacité de l'appareil orthodontique en est améliorée.

Les zones de collage présentent de préférence un état de surface améliorant le collage. Une zone de collage peut en particulier présenter une surface texturée, en particulier une surface sablée ou présentant un moletage, par exemple sous la forme d'une grille. Dans un mode de réalisation, les zones de collage sont traitées par laser pour créer des microreliefs, ce qui augmente la surface de contact entre la zone de collage et la colle. Les textures classiquement appliquées aux surfaces de collage des attaches des appareils orthodontiques conventionnels peuvent être appliquées à une zone de collage pour augmenter la surface de collage.

De préférence, au moins une partie des zones de collage 12, de préférence chacune des zones de collage 12 présente une surface supérieure à un 1 mm², de préférence supérieure à 2 mm², de préférence supérieure à 5 mm².

Un pont 14 est une partie de l'appareil orthodontique qui n'est pas collée, directement ou indirectement, sur une dent. Un pont 14 peut s'étendre entre deux dents adjacentes ou non.

Au moins une partie du ruban à mémoire de forme est en un matériau à mémoire de forme.

Le matériau à mémoire de forme peut être en particulier choisi dans le groupe formé les matériaux présentant des propriétés de super-élasticité, de mémoire de forme simple et/ou double sens.

Le matériau à mémoire de forme peut être en particulier choisi dans le groupe formé les alliages nickel-titane NiTi, CuAlZn et CuNiAl, de préférence parmi les alliages NiTi.

Le matériau à mémoire de forme peut être également un polymère biocompatible.

Les alliages nickel-titane sont des matériaux préférés.

Dans un mode de réalisation, le ruban à mémoire de forme comporte un ou plusieurs renforts rigides 22 et/ou crochets, de préférence en acier ou en nickel-titane avec une mémoire de forme réduite, permettant l'accrochage d'élastiques intermaxillaires.

De préférence, pour éviter tout bi-métalisme, le renfort et/ou le crochet sont réalisés en un des métaux constituant l'alliage à mémoire de forme du ruban.

La présence d'un renfort a pour objectif d'éviter une déformation parasite du ruban à mémoire de forme lors de l'utilisation d'accessoires générant une force supérieure au domaine élastique de certains tronçons du ruban, notamment en cas d'utilisation d'élastiques inter-maxillaires.

Un renfort 22 est de préférence disposé en face d'une zone de collage, du côté du ruban opposé à ladite zone de collage, de préférence dans une concavité ménagée dans le ruban, par exemple une rainure 24.

Dans un mode de réalisation, un renfort s'étend le long du ruban à mémoire de forme sur une longueur supérieure à 1 cm, supérieure à 2 cm, ou supérieure à 5 cm.

Le renfort peut prendre la forme d'un fil, en particulier la forme d'un arc.

Le renfort comporte au moins deux fils rigides, ou « barres », qui peuvent être insérées, par coulissement, dans une rainure 24.

Le renfort peut être noyé au sein du ruban à mémoire de forme. Dans un mode de réalisation, il est disposé dans une rainure longitudinale (c'est-à-dire sensiblement parallèle à la direction principale X), de préférence ménagée sur la face extrados du ruban à mémoire de forme, c'est-à-dire sur la face du ruban à mémoire de forme qui, dans la position de service, est orientée vers l'intérieur de la bouche.

Dans un mode de réalisation préféré, le renfort n'est disposé dans la rainure longitudinale qu'une fois que les dents ont été repositionnées, c'est-à-dire après que le ruban à mémoire de forme a cessé d'être actif et présente une forme stable. La rainure longitudinale sert ainsi de logement pour un renfort, de préférence en acier ou en nickel-titane avec une mémoire de forme réduite, permettant de transformer le ruban à mémoire de forme en un appareil orthodontique passif. Avantageusement, le même appareil peut donc successivement être actif, puis passif. Réciproquement, un appareil passif peut être activé en retirant un renfort.

Les crochets sont disposés à des localisations spécifiques au traitement envisagé.

Des crochets peuvent en particulier être disposés sur un renfort et/ou dans un tronçon d'attache.

Dans un mode de réalisation préféré, le ruban à mémoire de forme est tout entier en un matériau à mémoire de forme, par exemple en NiTi, éventuellement à l'exception desdits renforts et desdits crochets.

De préférence, le ruban à mémoire de forme est obtenu par fabrication additive, au moyen d'une imprimante 3D métal. Il ne comporte donc pas de soudure ou d'autres moyens de fixation entre différentes parties du ruban à mémoire de forme.

Le ruban à mémoire de forme peut être également réalisé par découpe laser dans une feuille d'alliage, puis pliage par un robot ou une machine automatisée.

De préférence, le ruban à mémoire de forme est conformé pour résister aux effets parasites d'élastiques de traction intermaxilaires. De préférence, il présente à cet effet des surépaisseurs locales et/ou des renforts. De préférence, il comporte encore des crochets pour accrocher de tels élastiques.

Le ruban à mémoire de forme présente une section transversale variable sur au moins une partie de sa longueur, tel que aucun tronçon du ruban à mémoire de forme représentant plus de 5% de la longueur du ruban ne présente une section transversale constante. Ainsi, il existe au moins deux sections transversales qui diffèrent l'une de l'autre.

La variation de la section transversale comporte, voire consiste
en une variation de forme, c'est-à-dire en une variation :
- du contour de la section transversale, par exemple parce que le contour s'arrondit ; et/ou
- de la position angulaire de la section transversale autour de la direction principale, c'est-à-dire de son orientation.
et/ou une variation de composition, c'est-à-dire une variation:
- de la nature du ou des matériaux qui définissent la section transversale ; et/ou
- de l'agencement des matériaux qui définissent la section transversale.

La variation peut également comporter une variation de propriétés d'un même matériau, en particulier sous l'effet d'un traitement thermique différent selon les zones de la section transversale considérées.

### Variations de forme

De préférence, le ruban à mémoire de forme présente une section transversale dont la forme varie de manière à exercer un champ de forces, dans les trois dimensions de l'espace, correspondant à un traitement orthodontique individualisé, c'est-à-dire déterminé en fonction d'un patient particulier. Par exemple, classiquement, les forces à exercer sur les molaires sont plus élevées que les forces à exercer sur les incisives. Une différence de forme des sections transversales des tronçons inter-attaches exerçant leurs actions sur les molaires et sur les incisives permet avantageusement d'adapter les forces en conséquence. De préférence, le ruban à mémoire de forme présente une section transversale dont la forme varie, de préférence progressivement, le long de la direction principale X, sur plus de 50%, de préférence plus de 60%, de préférence plus de 70%, de préférence plus de 80%, de préférence plus de 90%, de préférence sensiblement 100% de sa longueur. Autrement dit, la longueur cumulée des tronçons du ruban à mémoire de forme qui présentent une section transversale de forme constante représente de préférence moins de 50%, de préférence moins de 40%, de préférence moins de 30%, de préférence moins de 20%, de préférence moins de 10%, de préférence sensiblement 0% de la longueur du ruban à mémoire de forme.

Comme illustré sur la figure 5, dans un mode de réalisation préféré, la variation de la forme de la section transversale est continue sur toute la longueur du ruban à mémoire de forme. Elle peut être ainsi parfaitement adaptée au besoin d'un patient particulier.

Dans le mode de réalisation préféré de la figure 5, et comme défini dans l'invention, le ruban à mémoire de forme est monobloc. Des essais ont montré que le contrôle de l'action du ruban à mémoire de forme en est considérablement facilité, en particulier en comparaison à un appareil orthodontique comportant un arc fixé à des attaches (« *brackets* » en anglais).

De préférence, la variation de la forme de la section transversale, le long de la direction principale X, est progressive. Avantageusement, une variation de forme progressive évite de créer une arête susceptible de blesser le patient.

Dans un mode de réalisation, les variations de la section transversale comportent une modification du contour et/ou de l'orientation par rapport à la direction principale X.

La variation du contour peut conduire à une modification de la forme générale de ce contour. Par exemple, elle peut être parallélépipédique dans un premier tronçon du ruban à mémoire de forme, puis circulaire dans un autre tronçon.

Sur la figure 2d par exemple, la forme générale de la section transversale varie le long de la direction principale X, en particulier dans au moins un tronçon inter-attaches.

Dans un mode de réalisation, le contour de la section transversale du ruban à mémoire de forme, en particulier dans au moins un tronçon d'attache, présente localement une courbure concave, au moins du côté « intérieur », », c'est-à-dire qui est orienté vers les dents dans la position de service, comme représenté sur la figure 2e (formes à gauche et à droite). Cette courbure concave peut évoluer le long de la direction principale X. Elle peut notamment servir à définir une zone de collage.

De préférence, le contour de la section transversale du ruban à mémoire de forme, en particulier dans au moins un tronçon inter-attaches, de préférence dans chaque tronçon inter-attaches, présente localement une courbure convexe du côté « extérieur », c'est-à-dire qui n'est pas orienté vers les dents dans la position de service, par exemple une section transversale de forme générale hémidiscoïdale, en demi-lune. Localement, le ruban à mémoire de forme est par exemple un demi-jonc.

Le risque de blessure du patient en est réduit.

De préférence, au moins les tronçons d'attache présentent une courbure concave du côté intérieur et une courbure convexe du côté extérieur, par exemple une section en forme générale de croissant de lune. De préférence, au moins les tronçons inter-attaches présentent une courbure convexe du côté extérieur.

La variation du contour peut conduire à une variation de l'aire de la section transversale.

Sur la figure 2b, la forme générale de la section transversale reste rectangulaire, mais la largeur et la longueur de la section sont variables en fonction de la position le long de la direction principale X.

Dans un mode de réalisation, la variation du contour peut constituer en une simple modification homothétique du contour.

Sur la figure 2c, le contour de la section transversale reste constant, mais l'orientation autour de la direction principale X varie en fonction de la position le long de la direction principale X.

Dans un mode de réalisation, la variation de la section transversale comporte nécessairement une modification du contour, avec ou sans modification de l'aire de la section transversale, indépendamment d'éventuelles variations de l'orientation autour de la direction principale X.

Dans un mode de réalisation, la variation de la section transversale est un amincissement, de préférence dans une direction latérale, c'est-à-dire parallèlement au plan général P.

Le ruban à mémoire de forme, et en particulier un tronçon inter-attaches, peut prendre la forme, par exemple, d'un cylindre droit, avec ou sans plis, éventuellement tordu sur lui-même, d'un ressort, présentant une boucle d'ouverture ou de fermeture d'espace, d'une boucle d'ingression (force sur la dent dans la direction de l'alvéole osseuse), d'une boucle d'égression (action inverse à une ingression), d'une boucle adaptée pour exercer un torque (torsion sur champ d'un tronçon inter-attaches, comme si on torsadait un arc).

Le ruban à mémoire de forme peut être constitué un seul matériau à mémoire de forme (figures 2b à 2e).

De préférence, et en particulier lorsque le ruban à mémoire de forme est constitué en un seul matériau à mémoire de forme, il présente de préférence des surépaisseurs dans les tronçons d'attache. De préférence, l'épaisseur maximale d'un tronçon d'attache, de préférence d'un tronçon d'attache quelconque, est supérieure à l'épaisseur maximale du ou des tronçons inter-attaches adjacents, c'est-à-dire auxquels ledit tronçon d'attache est lié.

Avantageusement, une surépaisseur permet de limiter les déformations susceptibles d'être à l'origine de décollements des zones de collage.

Dans un mode de réalisation, la surépaisseur d'un tronçon d'attache est suffisante pour réduire, voire sensiblement supprimer le comportement de la mémoire de forme du matériau qui le constitue. Dans un mode de réalisation, le ruban à mémoire de forme est ainsi constitué de tronçons inter-attaches qui présentent une mémoire de forme et de tronçons d'attaches qui, bien que constitué en un matériau à mémoire de forme, ne présentent sensiblement pas de mémoire de forme.

Un épaississement de plusieurs tronçons d'attache et inter-attaches adjacents permet par ailleurs de constituer une zone d'ancrage sensiblement indéformable. Une zone d'ancrage peut être en particulier utilisée pour tracter une ou plusieurs dents dont la valeur d'ancrage est inférieure.

De simples essais permettent de déterminer des surépaisseurs adaptées.

Les variations de la section transversale, et en particulier les variations de la forme de la section transversale, permettent avantageusement une bonne adaptation de la force exercée localement sur les dents.

### Variations de traitement thermique

Les tronçons inter-attaches peuvent également subir des traitements thermiques diminuant les forces exercées sur les dents, tout en conservant les propriétés de mémoire de forme.

De tels traitements thermiques sont en particulier décrits dans le Rapport « Alliages à mémoire de forme » - CARMA (CENTRE D'ANIMATION REGIONAL EN MATERIAUX AVANCES) - Actualisation décembre 2001.

Dans un mode de réalisation, les régions mésiales du ruban à mémoire de forme, c'est-à-dire destinées à être les plus proches des lèvres en position de service, subissent un traitement thermique. De préférence, le ruban à mémoire de forme reçoit localement des traitements thermiques dont la durée augmente à mesure que la région traitée est proche d'une extrémité dudit ruban éloignée des lèvres en position de service.

Une telle différence de traitement thermique est particulièrement avantageuse lorsque le secteur antérieur d'une arcade, composé de dents mono-radiculées, doit subir des forces plus faibles que le secteur postérieur. Une modification de la forme de la section transversale n'est avantageusement pas toujours indispensable.

### Variations de composition

Dans un mode de réalisation, comme représenté sur les figures 2f à 2j, le ruban à mémoire de forme comporte plusieurs matériaux, dont au moins un est à mémoire de forme. Dans un mode de réalisation, tous les matériaux sont à mémoire de forme.

Un ou plusieurs matériaux peuvent être visibles dans une section transversale. Par exemple, sur la figure 2j, le contour de la section transversale est constant, mais la nature du matériau qui définit la section transversale est variable le long de la direction principale X. Chaque section transversale n'est cependant définie que par un unique matériau.

Dans un mode de réalisation, le long de la direction principale X, le ruban à mémoire de forme comporte une succession de tronçons en un matériau à mémoire de forme et de tronçons en un matériau sans mémoire de forme.

De préférence, les tronçons d'attaches 11 sont inclus dans des tronçons en un matériau sans mémoire de forme. Le matériau sans mémoire de forme peut être en particulier un acier. Avantageusement, la forme des tronçons d'attache 11 est ainsi stable, ce qui limite les risques de décollement, voire de détachement.

Le matériau à mémoire de forme est de préférence un alliage nickel-titane. De préférence, les tronçons en un matériau à mémoire de forme sont inclus dans des tronçons inter-attaches respectifs.

Dans un mode de réalisation, le long de la direction principale X, le ruban à mémoire de forme comporte, sur au moins une partie de sa longueur, une succession de tronçons d'attaches en acier et de tronçons inter-attaches en NiTi.

Dans un mode de réalisation, comme représenté sur les figures 2g à 2i, une section transversale peut être définie par plusieurs matériaux. Sur ces figures, la nature et/ou l'agencement du ou des matériaux qui définissent la section transversale sont variables le long de la direction principale X.

Différents matériaux peuvent être disposés sous la forme de couches superposées, par exemple selon le plan général P ou dans un plan perpendiculaire au plan général P, comme représenté sur la figure 2f.

La variation de la nature d'un matériau peut être continue, la teneur en ce matériau étant progressivement augmentée ou réduite. La variation du comportement du ruban à mémoire de forme 10 peut en particulier résulter d'une variation progressive de la constitution de l'alliage à mémoire de forme.

Dans un mode de réalisation, les régions postérieures du ruban à mémoire de forme ont une composition différente des régions antérieures. Une telle différence de composition est particulièrement avantageuse lorsque le secteur antérieur d'une arcade, composé de dents mono-radiculées, doit subir des forces plus faibles que le secteur postérieur. Une modification de la forme de la section transversale n'est avantageusement pas toujours indispensable.

La figure 3 représente un autre exemple d'appareil orthodontique selon l'invention.

Sur la figure 3, le ruban à mémoire de forme 10, monobloc, s'étend face à trois dents D1, D2 et D3. Il est collé, par des zones de collage 12₁ et 12₂, sur les dents extérieures D1 et D3, les zones de collage 12₁ et 12₂ ayant des formes complémentaires aux surfaces des dents D1 et D3 sur lesquelles elles s'appliquent.

Le ruban à mémoire de forme est conformé de manière à agir sur la dent D2 à déplacer lorsqu'il revient vers sa position stable. De préférence, le ruban à mémoire de forme prend appui sur la dent D2.

La figure 3b représente l'évolution de la section transversale le long de la direction principale X. Le ruban à mémoire de forme 10 comporte en particulier des tronçons amincis 16 dans lesquels la surface de la section transversale est réduite.

La réduction d'une dimension de la section transversale du ruban à mémoire de forme, et en particulier de son épaisseur, peut être en particulier utilisée pour des tronçons inter-attaches, si les mouvements à appliquer sont simples et de faible intensité. La réduction d'une dimension s'accompagne en effet d'une diminution de la force appliquée. L'application d'une force de faible intensité est notamment recherchée dans les secteurs dentaires antérieurs dans lesquels les dents sont monoradiculées et les racines relativement petites. La réduction de l'intensité des forces appliquées peut également résulter d'un traitement thermique des tronçons inter-attaches, comme expliqué précédemment.

De préférence, la réduction des dimensions de la section transversale est effectuée suivant une direction privilégiée, par exemple suivant une direction dans le plan général P et perpendiculaire à la direction générale X. Le ruban à mémoire de forme a ainsi tendance à se plier autour d'un axe perpendiculaire au plan général P.

L'orientation de la section transversale autour de la direction principale X permet également d'orienter la flexion du ruban 10.

Dans la région centrale, la structure est composite, le tronçon 18 pouvant être en un premier matériau à mémoire de forme et le deuxième tronçon 20 pouvant être en un deuxième matériau à mémoire de forme.

Une structure composite peut également résulter d'une propriété particulière d'une région résultant de l'application d'un traitement particulier, par exemple d'un traitement thermique spécifique permettant de réduire les forces exercées. Par exemple, un traitement thermique peut être appliqué sur une région antérieure du ruban à mémoire de forme, afin que les forces délivrées soient faibles et ainsi assurer une déflection importante d'un tronçon inter-attaches. L'exercice de forces plus faibles peut être en particulier utile pour les incisives, qui présentent de petites racines.

Quel que soit le mode de réalisation, de préférence, au moins deux, de préférence plus de deux, plus de trois, plus de quatre, plus de cinq, voire plus de huit tronçons du ruban à mémoire de forme, représentant chacune plus de 1%, de préférence plus de 5%, de préférence plus de 10%, voire plus de 20% de la longueur du ruban à mémoire de forme, présentent des sections transversales différentes de celles du (des) tronçon(s) adjacent(s). Sur la figure 4 par exemple, le profil de section transversale comporte cinq tronçons Li à L₅ qui, chacun, présente une section transversale différente de celles de la (des) tronçon(s) adj acent(s).

Dans un mode de réalisation, le ruban à mémoire de forme comporte au moins un, de préférence au moins deux, de préférence plus de deux, plus de trois, plus de quatre, plus de cinq, voire plus de huit tronçons dans lesquels la section transversale est continûment variable, chacun desdits tronçons à section variable s'étendant sur plus de 5%, de préférence plus de 10%, voire plus de 20% de la longueur dudit ruban. Par exemple, le ruban à mémoire de forme représenté sur la figure 3b présente un unique tronçon dans lequel la section transversale varie de manière continue le long de la direction principale X.

Aucun tronçon du ruban à mémoire de forme représentant plus de 5%, voire plus de 2% de la longueur du ruban ne présente une section constante. Autrement dit, il n'existe pas de long tronçon du ruban de section constante.

Les figures 5a à 5c illustrent des variations de la section transversale du ruban en hauteur (figure 5a) ou en épaisseur (figure 5c). Les dimensions transversales du ruban peuvent être croissantes ou décroissantes à mesure que l'on s'approche de ses extrémités.

### Procédé de fabrication

La fabrication d'un ruban à mémoire de forme selon l'invention comprend de préférence les étapes a) à c) décrites ci-dessus.

A l'étape a), l'orthodontiste détermine les dents en malposition du patient et comment elles doivent être déplacées pour atteindre l'agencement souhaité à partir d'un agencement initial desdites dents. A cet effet, l'orthodontiste peut prendre une empreinte des dents, réaliser un modèle en plâtre des dents, puis évaluer comment les différentes dents doivent être déplacées.

De préférence, l'orthodontiste effectue un scan tridimensionnel des dents en malposition du patient, de manière à obtenir un modèle numérique initial des dents.

L'orthodontiste effectue alors une simulation, de préférence informatique, du traitement afin de déterminer un ensemble de mouvements et de forces à exercer sur lesdites dents pour obtenir ledit traitement.

Il peut en particulier modifier le modèle numérique initial jusqu'à obtenir un modèle numérique final correspondant à l'agencement souhaité des dents. Une comparaison des modèles numériques final et initial lui permet de déterminer précisément les différents déplacements nécessaires.

A l'étape b), l'orthodontiste évalue l'ensemble des forces nécessaires pour déplacer les dents du patient vers l'agencement final souhaité. De préférence, il détermine également le moment auquel ces forces doivent être appliquées.

A l'étape c), l'orthodontiste fabrique l'appareil orthodontique, et en particulier le ruban orthodontique, afin qu'il puisse exercer l'ensemble des forces déterminées à l'étape b), au moment adapté.

En particulier, les dimensions des tronçons inter-attaches sont adaptées en fonction de la force ou de l'ancrage à exercer.

L'ancrage a pour objectif de fixer le ruban à mémoire de forme à une ou plusieurs dents qui seront capables de rester sensiblement immobiles. De préférence, plusieurs dents sont rigidement fixées les unes aux autres, au moyen d'un « tronçon d'ancrage » du ruban à mémoire de forme. De préférence, le tronçon d'ancrage est en acier et/ou présente une section transversale adaptée pour limiter sa déformation, en particulier une surépaisseur. Une adaptation de la section transversale est notamment bien adaptée lorsque le ruban à mémoire de forme est entièrement constitué en un matériau à mémoire de forme.

Aux étapes b) et c), l'orthodontiste met de préférence en œuvre un programme d'ordinateur adapté. En particulier, pour prévoir le comportement d'un appareil orthodontique selon l'invention, c'est-à-dire pour simuler et "programmer" le ruban à mémoire de forme, il peut utiliser des méthodes dont les principes sont bien connus :
Il est notamment possible de modéliser théoriquement le comportement des matériaux en fonction de leur environnement, et en particulier en fonction des interactions avec d'autres matériaux.

Alternativement, le comportement peut être anticipé à partir de différents essais. La multiplication des essais et leur analyse permettent ainsi d'anticiper, de manière empirique, le comportement d'un ruban à mémoire de forme spécifique.

Ces deux approches, théorique et empirique, conduisent à un modèle numérique du comportement du ruban à mémoire de forme, en fonction de son environnement et du temps. Ce modèle, dit « prédictif », permet de prévoir l'action d'un ruban à mémoire de forme particulier. Réciproquement, pour obtenir une action particulière souhaitée, le modèle prédictif permet à l'orthodontiste, de préférence assisté par l'ordinateur, d'élaborer un ruban à mémoire de forme en fonction de ladite action souhaitée.

En pratique, l'orthodontiste peut créer un modèle numérique d'un ruban à mémoire de forme à tester, puis, avec le modèle prédictif, simuler l'action de ce ruban à mémoire de forme sur les dents, en fonction du temps. Il peut ainsi rechercher, de préférence à l'aide du programme d'ordinateur, la configuration du ruban la mieux adaptée au traitement visé.

Le degré de précision de l'approche empirique est généralement inférieur à celui obtenu avec l'approche théorique. Cependant, l'approche empirique est plus simple à mettre en œuvre.

A l'étape c), l'orthodontiste peut ainsi déterminer la section transversale locale dudit ruban en fonction de la force à exercer localement, et, de préférence, en fonction du moment auquel cette force doit être exercée. De préférence, la force à exercer « localement », et donc la configuration « locale » de la section transversale, sont évaluées pour chaque dent à déplacer.

Lors de la conception du ruban, la largeur et l'épaisseur dudit ruban peuvent varier en fonction de l'intensité des forces à appliquer et en fonction de l'importance de la surface radiculaire et/ou en fonction de la distance inter-attache. Plus la distance inter-attache est petite, plus la force est importante, à épaisseur identique. Ces dimensions peuvent également être augmentées sans pour autant appliquer de forces. Dans ce cas, il s'agit au contraire d'empêcher certains types de mouvement, notamment les mouvements parasites de perte d'ancrage, de bowing effect, de rabbiting.

Pour fabriquer le ruban à mémoire de forme, l'orthodontiste utilise selon l'invention une imprimante 3D. Une telle imprimante permet avantageusement de fabriquer un ruban à mémoire de forme de forme complexe et/ou en plusieurs matériaux, avec une bonne précision.

L'impression 3D permet également une fabrication immédiate du ruban à mémoire de forme dans la conformation désirée en fin de traitement.

De préférence, lors de la fabrication, l'orthodontiste désactive la mémoire de forme par refroidissement en-dessous de la température de seuil correspondante. Il conforme ensuite le ruban à mémoire de forme, en trois dimensions, pour qu'il corresponde à l'état initial de l'arcade dentaire avec ses malpositions. De préférence, la conformation est effectuée au moyen d'un robot. Les sociétés Sure Smile ou Incognito propose des robots capables de telle conformation.

Lors d'une étape d) ultérieure, l'orthodontiste colle le ruban à mémoire de forme tout en maintenant la température en dessous de ladite température de seuil.

Une fois collé, la température du ruban remonte vers la température corporelle du patient. La température dépasse donc la température de seuil, ce qui active la mémoire de forme et génère immédiatement des forces personnalisées pour obtenir une correction du positionnement des dents, dans les trois dimensions de l'espace.

La figure 7a illustre comment un ruban à mémoire de forme 10 peut rapprocher deux dents D1 et D2. Le ruban à mémoire de forme est collé, par des zones de collage respectives 12₁ et 12₂ sur des faces des dents D1 et D2, respectivement. Le ruban à mémoire de forme présente une boucle 30 qui, dans les conditions de température de la bouche, tend à se refermer, et ainsi rapprocher les dents D1 et D2 l'une de l'autre.

La figure 7b illustre un ruban à mémoire de forme permettant à la fois d'écarter l'une de l'autre des dents D1 et D2, par extension d'un tronçon à mémoire de forme 14₁, et d'aligner une dent D3 avec les dents D1 et D2, par extension d'un deuxième tronçon à mémoire de forme 14₂ fixée non seulement sur les dents D1 et D2, mais également sur la dent intermédiaire D3. A la différence du ruban à mémoire de forme illustré sur la figure 7a, le ruban à mémoire de forme représenté sur la figure 7b comporte des boucles qui tendent à s'ouvrir lorsque le ruban à mémoire de forme est disposé dans la bouche du patient.

Un ruban à mémoire de forme selon l'invention peut également servir de guide chirurgical pour la pose de mini-vis. Il est en particulier possible d'imprimer/souder une douille reliée au ruban par des extensions. La douille permet d'introduire un foret pour réaliser un avant-trou. Cette étape facilite l'insertion dans le bon axe et à la profondeur souhaitée d'une mini-vis d'ancrage.

Un ruban à mémoire de forme selon l'invention peut également définir une forme de gouttière incluant un tel guide. Dans ce cas, la douille est noyée dans la gouttière.

La pose de la mini-vis est avantageusement possible immédiatement après le collage du ruban.

Comme cela apparaît clairement à présent, l'invention fournit un ruban à mémoire de forme personnalisé, c'est-à-dire programmé spécifiquement pour un traitement orthodontique particulier. Cette programmation permet de s'assurer qu'à tout instant, l'action de l'appareil orthodontique correspondra précisément à l'action souhaitée.

L'action de l'appareil orthodontique peut ainsi être optimisée, pour un traitement rapide et/ou pour limiter le phénomène de hyalinisation. L'optimisation permet également de limiter le nombre de modifications du traitement orthodontique, et en particulier le nombre de rendez-vous chez l'orthodontiste.

Par ailleurs, contrairement aux traitements orthodontiques de l'art antérieur, il n'est pas nécessaire de multiplier le nombre d'arcs orthodontiques pour parvenir à un alignement des dents.

En particulier, l'appareil orthodontique selon l'invention s'adapte parfaitement aux contours des dents à aligner. Il exerce des forces d'intensité variable selon l'importance de la malposition de la dent ainsi qu'en fonction de la surface radiculaire des dents. Plus cette surface est importante, plus les forces à appliquer augmentent.

La maîtrise des forces appliquées pendant le traitement orthodontique limite également le risque de décollement.

Par ailleurs, le ruban à mémoire de forme peut avantageusement être fixé directement sur les dents, ce qui simplifie sa mise en position de service.

Le traitement orthodontique est donc plus rapide, plus efficace et de coût réduit.

Bien entendu, l'invention n'est pas limitée aux modes de réalisations décrits et représentés, fournis à des fins illustratives seulement. En particulier, les différentes variations décrites ci-dessus peuvent être combinées.

En outre, un appareil orthodontique peut comporter plusieurs rubans à mémoire de forme selon l'invention.

L'appareil orthodontique peut être un appareil orthodontique actif, semi-passif ou passif. Dans un mode de réalisation, l'appareil orthodontique est un appareil orthodontique assurant une contention passive, mais pouvant être activé si nécessaire, en cas de déplacement non souhaité des dents.

L'appareil orthodontique peut être un ruban à mémoire de forme semi-passif permettant de maintenir un alignement après un traitement actif.

Le ruban à mémoire de forme peut être utilisé exclusivement pour un traitement actif, exclusivement pour de la contention et de manière mixte. Le ruban à mémoire de forme aligne les dents, puis il est découpé en distal des canines. Les deux parties latérales sont décollées, mais la partie antérieure est laissée en place pour jouer le rôle de contention semi-passive ou semi-active.

Dans un mode réalisation, le ruban à mémoire de forme est utilisé après une récidive. En particulier, il peut être utilisé dans le cas où un patient a déjà eu un traitement actif, puis une contention, où lala contention s'est cassée, puis une récidive est apparue. Dans ce cas, la fabrication du ruban à mémoire de forme permet de corriger les défauts liés à la récidive et jouer le rôle de contention.

Dans un mode de réalisation, le ruban à mémoire de forme est utilisé en fin de traitement actif en vue de réaliser les finitions nécessaires puis la contention. Par exemple, les traitements Invisalign® peuvent laisser de légers défauts en fin de traitement. Un ruban à mémoire de forme permet de réaliser les finitions, puis la contention.

La contention semi-active existe depuis le brevet US2016058527A. La contention se réactive lorsque les dents tendent à bouger soit vers leur position initiale soit vers une position différente (ni initiale ni finale).

Dans le cas ou le ruban à mémoire de forme se décolle d'une dent, la dent a la possibilité de rebouger car elle n'est plus maintenue. Dans ce cas, lors d'une séance de contrôle, l'orthodontiste peut refroidir les zones inter-attaches adjacentes à la zone à recoller. Ce refroidissement permet de manipuler plus facilement le ruban à mémoire de forme pour le positionner en contact avec la dent qui a bougé. Après recollement, la température corporelle réactive partiellement le ruban à mémoire de forme (contention) et réaligne la dent. Cette procédure est beaucoup plus rapide que la pratique actuelle selon laquelle le docteur est amené à retirer toute la contention, refaire un traitement court en recollant des brackets, puis replacer une attèle de contention classique.

Les attèles de contention traditionnelles peuvent se déformer plastiquement après que le patient a croqué dans un aliment dur. Dans ces cas, fréquents, l'attèle traditionnelle passe de passive à active. Cependant, l'action de l'attèle déformée va dans le sens d'une malposition pour la ou les dents concernées.

Un ruban de contention à mémoire de forme selon l'invention peut avantageusement récupérer d'elle-même sa forme après déformation. Avantageusement, les dents n'ont pas le temps de se déplacer que le ruban à mémoire de forme a déjà repris sa forme de service.

## Revendications

1. Procédé de fabrication d'un ruban à mémoire de forme d'un appareil orthodontique, ledit ruban à mémoire de forme (10) étant monobloc, présentant une section transversale variable en fonction de la position longitudinale de ladite section transversale, et comportant une zone de collage (12 ;121,122) conformée de manière à présenter une forme sensiblement identique à celle d'une dent (D1, D3), ledit procédé comportant les étapes suivantes :
a) détermination d'un traitement orthodontique adapté au traitement des dents d'un patient ;
b) détermination d'un ensemble de forces à exercer localement sur lesdites dents pour obtenir ledit traitement orthodontique et de la forme de la surface des dents sur lesquelles des zones de collage (12;12₁,12₂) dudit ruban à mémoire de forme doivent être collées ;
c) fabrication dudit ruban à mémoire de forme au moyen d'une imprimante 3D, la section transversale locale dudit ruban à mémoire de forme étant déterminée en fonction desdites forces et de manière à définir des zones de collage (12;12₁,12₂) sensiblement identiques aux surfaces desdites dents sur lesquelles elles doivent être collées,
procédé dans lequel la variation de la section transversale comporte une variation de composition, c'est-à-dire une variation :
- de la nature du ou des matériaux qui définissent la section transversale ; et/ou
- de l'agencement des matériaux qui définissent la section transversale,
et/ou dans lequel la variation de la section transversale comporte une variation de forme, c'est-à-dire une variation :
- du contour de la section transversale ; et/ou
- de la position angulaire de la section transversale autour de la direction principale (X) dudit ruban à mémoire de forme,
aucun tronçon du ruban à mémoire de forme représentant plus de 5% de la longueur du ruban présentant une section transversale constante,
au moins une partie du ruban à mémoire de forme étant en un matériau à mémoire de forme.

2. Procédé selon l'une quelconque des revendications précédentes, dans lequel, à l'étape c), on fabrique un ruban à mémoire de forme (10) dont aucun tronçon représentant plus de 2% de la longueur du ruban présente une section constante.

3. Procédé selon l'une quelconque des revendications précédentes, dans lequel, à l'étape c), on fait varier localement la section transversale locale d'un tronçon inter-attaches (14) s'étendant entre des première et deuxième dites zones de collage successives le long de la direction principale (X) dudit ruban à mémoire de forme en fonction des forces à exercer sur des première et deuxième dents sur lesquelles lesdites première et deuxième zones de collage sont destinées à être collées, respectivement.

4. Procédé selon l'une quelconque des revendications précédentes, dans lequel, à l'étape c), on traite thermiquement une ou plusieurs régions du ruban à mémoire de forme (10) afin de réduire localement les forces exercées sur les dents en position de service, l'intensité du traitement thermique d'une région du ruban à mémoire de forme (10) dépendant de la distance des dents à proximité de ladite région, dans la position de service, par rapport aux incisives dudit patient.

5. Appareil orthodontique comportant un ruban à mémoire de forme monobloc fabriqué au moyen d'une imprimante 3D, dont la section transversale est variable en fonction de la position longitudinale de ladite section transversale, et comportant une zone de collage conformée de manière à présenter une forme sensiblement identique à celle d'une dent, la variation de la section transversale le long de la direction principale (X) étant progressive sur plus de 5% de la longueur dudit ruban à mémoire de forme, la variation de ladite section transversale comportant
- une variation de composition, c'est-à-dire une variation :
- de la nature du ou des matériaux qui définissent la section transversale ; et/ou
- de l'agencement des matériaux qui définissent la section transversale,
et/ou,
- une variation de forme, c'est-à-dire une variation :
- du contour de la section transversale ; et/ou
- de la position angulaire de la section transversale autour de la direction principale (X) dudit ruban à mémoire de forme,
aucun tronçon du ruban à mémoire de forme représentant plus de 5% de la longueur du ruban présentant une section transversale constante,
au moins une partie du ruban à mémoire de forme étant en un matériau à mémoire de forme.

6. Appareil orthodontique selon la revendication immédiatement précédente, comportant un ou plusieurs tronçons dans le(s)quel(s) la section transversale varie progressivement le long de la direction principale (X), la longueur cumulée du ou desdits tronçons représentant plus de 50% de la longueur dudit ruban à mémoire de forme (10).

7. Appareil orthodontique selon la revendication immédiatement précédente, dans lequel la longueur cumulée du ou desdits tronçons représente plus de 90% de la longueur dudit ruban à mémoire de forme (10).

8. Appareil orthodontique selon l'une quelconque des trois revendications immédiatement précédentes, dans lequel le ruban comporte au moins une région en un matériau choisi dans le groupe formé par les alliages nickel-titane NiTi, CuAlZn et CuNiAl.

9. Appareil orthodontique selon l'une quelconque des quatre revendications immédiatement précédentes, comportant des tronçons d'attache (11) en acier et des tronçons inter-attaches (14) en un matériau à mémoire de forme, lesdites tronçons d'attache et tronçons inter-attaches (14) se succédant le long de la direction principale (X) du ruban à mémoire de forme.

10. Appareil orthodontique selon l'une quelconque des cinq revendications immédiatement précédentes, dans lequel le ruban à mémoire de forme comporte une rainure (24) dans laquelle un renfort (22) peut être logé afin de stabiliser la forme dudit ruban à mémoire de forme, et/ou des crochets, de préférence en acier, permettant l'accrochage d'élastiques intermaxillaires.

11. Appareil orthodontique selon la revendication immédiatement précédente, des dits crochets étant disposés sur un renfort et/ou dans un tronçon d'attache.

12. Appareil orthodontique selon l'une quelconque des sept revendications immédiatement précédentes, dans lequel le ruban à mémoire de forme est tout entier en NiTi.

13. Appareil orthodontique selon l'une quelconque des huit revendications immédiatement précédentes, dans lequel le ruban à mémoire de forme comporte au moins un tronçon dans lequel la section transversale est continûment variable, ledit tronçon s'étendant sur plus de 20% de la longueur dudit ruban, et/ou dans lequel aucun tronçon du ruban à mémoire de forme représentant plus de 2% de la longueur du ruban présente une section constante.

14. Appareil orthodontique selon l'une quelconque des neuf revendications précédentes, dans lequel chaque tronçon inter-attaches définit, du côté qui n'est pas orienté vers les dents dans la position de service, une surface extérieure convexe dépourvue d'arête.

15. Appareil orthodontique selon l'une quelconque des dix revendications précédentes, fabriqué suivant un procédé conforme à l'une quelconque des revendications 1 à 4.

## Patentansprüche

1. Verfahren zur Herstellung eines Formgedächtnisbands eines orthodontischen Geräts, wobei das Formgedächtnisband (10) einstückig ist, einen in Abhängigkeit von der Längsposition des Querschnitts veränderlichen Querschnitt aufweist und einen Klebebereich (12;12₁,12₂) umfasst, der so ausgebildet ist, dass er eine Form aufweist, die im Wesentlichen identisch mit der eines Zahns (D1, D3) ist, wobei das Verfahren die folgenden Schritte umfasst:
a) Bestimmen einer orthodontischen Behandlung, die zur Behandlung der Zähne eines Patienten geeignet ist;
b) Bestimmen einer Menge von Kräften, die lokal auf die Zähne auszuüben sind, um die orthodontische Behandlung zu erhalten, und der Form der Oberfläche der Zähne, auf welche die Klebebereiche (12;12₁,12₂) des Formgedächtnisbands geklebt werden sollen;
c) Herstellen des Formgedächtnisbands mit einem 3D-Drucker, wobei der lokale Querschnitt des Formgedächtnisbands in Abhängigkeit von den Kräften bestimmt wird und so, dass Klebebereiche (12;12₁,12₂) definiert werden, die im Wesentlichen identisch mit den Oberflächen der Zähne sind, auf die sie geklebt werden sollen,
bei dem die Änderung des Querschnitts eine Zusammensetzungsänderung umfasst, das heißt eine Änderung:
- der Art des oder der Materialien, die den Querschnitt definieren; und/oder
- der Anordnung der Materialien, die den Querschnitt definieren,
und/oder bei dem die Änderung des Querschnitts eine Formänderung umfasst, das heißt eine Änderung:
- der Kontur des Querschnitts; und/oder
- der Winkelposition des Querschnitts um die Hauptrichtung (X) des Formgedächtnisbands herum,
wobei kein Abschnitt des Formgedächtnisbands, der mehr als 5 % der Länge des Bands ausmacht, einen konstanten Querschnitt aufweist,
wobei mindestens ein Teil des Formgedächtnisbands aus einem Material mit Formgedächtnis besteht.

2. Verfahren nach einem der vorhergehenden Ansprüche, bei dem in Schritt c) ein Formgedächtnisband (10) hergestellt wird, von dem kein Abschnitt, der mehr als 2 % der Länge des Bands ausmacht, einen konstanten Querschnitt aufweist.

3. Verfahren nach einem der vorhergehenden Ansprüche, bei dem in Schritt c) der lokale Querschnitt eines Inter-Bracket-Abschnitts (14), der sich zwischen den ersten und zweiten entlang der Hauptrichtung (X) des Formgedächtnisbands aufeinander folgenden Klebebereichen erstreckt, in Abhängigkeit von den Kräften geändert wird, die auf erste und zweite Zähne auszuüben sind, auf welche die ersten und zweiten Klebebereiche jeweils geklebt werden sollen.

4. Verfahren nach einem der vorhergehenden Ansprüche, bei dem in Schritt c) eine oder mehrere Regionen des Formgedächtnisbands (10) wärmebehandelt werden, um die auf die Zähne in der Betriebsposition ausgeübten Kräfte lokal zu verringern, wobei die Intensität der Wärmebehandlung einer Region des Formgedächtnisbands (10) von der Distanz der Zähne in der Nähe der Region, in der Einsatzposition, in Bezug auf die Schneidezähne des Patienten abhängig ist.

5. Orthodontisches Gerät mit einem einstückigen Formgedächtnisband, das mit einem 3D-Drucker hergestellt wird, dessen Querschnitt in Abhängigkeit von der Längsposition des Querschnitts veränderlich ist und das einen Klebebereich umfasst, der so ausgebildet ist, dass er eine Form aufweist, die im Wesentlichen identisch mit der eines Zahns ist, wobei die Änderung des Querschnitts entlang der Hauptrichtung (X) über mehr als 5 % der Länge des Formgedächtnisbands zunimmt, wobei die Änderung des Querschnitts umfasst:
- eine Zusammensetzungsänderung, das heißt eine Änderung:
- der Art des oder der Materialien, die den Querschnitt definieren; und/oder
- der Anordnung der Materialien, die den Querschnitt definieren,
und/oder,
- eine Formänderung, das heißt eine Änderung:
- der Kontur des Querschnitts; und/oder
- der Winkelposition des Querschnitts um die Hauptrichtung (X) des Formgedächtnisbands herum,
wobei kein Abschnitt des Formgedächtnisbands, der mehr als 5 % der Länge des Bands ausmacht, einen konstanten Querschnitt aufweist,
wobei mindestens ein Teil des Formgedächtnisbands aus einem Material mit Formgedächtnis besteht.

6. Orthodontisches Gerät nach dem unmittelbar vorhergehenden Anspruch, das einen oder mehrere Abschnitte umfasst, in dem(denen) der Querschnitt sich zunehmend entlang der Hauptrichtung (X) ändert, wobei die Gesamtlänge des oder der Abschnitte mehr als 50 % der Länge des Formgedächtnisbands (10) ausmacht.

7. Orthodontisches Gerät nach dem unmittelbar vorhergehenden Anspruch, bei dem die Gesamtlänge des oder der Abschnitte mehr als 90 % der Länge des Formgedächtnisbands (10) ausmacht.

8. Orthodontisches Gerät nach einem der drei unmittelbar vorhergehenden Ansprüche, bei dem das Band mindestens eine Region aus einem Material umfasst, das aus der Gruppe gewählt ist, die durch die Nickel-Titan-Legierungen NiTi, CuAlZn und CuNiAl gebildet wird.

9. Orthodontisches Gerät nach einem der vier unmittelbar vorhergehenden Ansprüche, das Bracket-Abschnitte (11) aus Stahl und Inter-Bracket-Abschnitte (14) aus einem Material mit Formgedächtnis umfasst, wobei die Bracket-Abschnitte und die Inter-Bracket-Abschnitte (14) entlang der Hauptrichtung (X) des Formgedächtnisbands aufeinander folgen.

10. Orthodontisches Gerät nach einem der fünf unmittelbar vorhergehenden Ansprüche, bei dem das Formgedächtnisband eine Nut (24) umfasst, in der eine Verstärkung (22) aufgenommen sein kann, um die Form des Formgedächtnisbands zu stabilisieren, und/oder Haken, bevorzugt aus Stahl, die das Einhängen von intermaxillären Gummibändern ermöglichen.

11. Orthodontisches Gerät nach dem unmittelbar vorhergehenden Anspruch, wobei die Haken auf einer Verstärkung und/oder in einem Bracket-Abschnitt angeordnet sind.

12. Orthodontisches Gerät nach einem der sieben unmittelbar vorhergehenden Ansprüche, bei dem das Formgedächtnisband vollständig aus NiTi besteht.

13. Orthodontisches Gerät nach einem der acht unmittelbar vorhergehenden Ansprüche, bei dem das Formgedächtnisband mindestens einen Abschnitt umfasst, in dem der Querschnitt kontinuierlich veränderlich ist, wobei sich der Abschnitt über mehr als 20 % der Länge des Bands erstreckt, und/oder bei dem kein Abschnitt des Formgedächtnisbands, der mehr als 2 % der Länge des Bands ausmacht, einen konstanten Querschnitt aufweist.

14. Orthodontisches Gerät nach einem der neun unmittelbar vorhergehenden Abschnitte, bei dem jeder Inter-Bracket-Abschnitt auf der Seite, die in der Einsatzposition nicht zu den Zähnen gerichtet ist, eine gratfreie konvexe Außenoberfläche definiert.

15. Orthodontisches Gerät nach einem der zehn unmittelbar vorhergehenden Ansprüche, das nach einem Verfahren nach einem der Ansprüche 1 bis 4 hergestellt ist.

## Claims

1. A method for producing a shape memory band of an orthodontic appliance, said shape memory band (10) being one piece, having a cross section that can vary according to the longitudinal position of said cross section, and comprising a bonding zone (12; 12₁,12₂) configured in such a way as to exhibit a shape substantially identical to that of a tooth (D1, D3), said method comprising the following steps:
a) determining an orthodontic treatment suitable for treating the teeth of a patient;
b) determining a set of forces to be exerted locally on said teeth in order to obtain said orthodontic treatment, and the shape of the surface of the teeth to which bonding zones (12; 12₁, 12₂) of said shape memory band are to be bonded;
c) producing said shape memory band with a 3D printer, the local cross section of said shape memory band being determined according to said forces and in such a way as to define bonding zones (12; 12₁, 12₂) substantially identical to the surfaces of said teeth to which they are to be bonded,
method in which the variation of the cross section comprises a variation of composition, i.e. a variation:
- of the nature of the material or materials that define the cross section and/or
- of the arrangement of the materials that define the cross section,
and/or in which the variation of the cross section comprises a variation of shape, i.e. a variation:
- of the contour of the cross section and/or
- of the angular position of the cross section about the main direction (X) of said shape memory band,
no portion of the shape memory band representing more than 5% of the length of the band exhibiting a cross section that is constant,
at least part of the shape memory band being made from a shape memory material.

2. The method as claimed in the immediately preceding claim, in which, in step c), a shape memory band (10) is produced of which no portion representing more than 2% of the length of the band exhibits a cross section that is constant.

3. The method as claimed in any one of the preceding claims, in which, in step c), the local cross section of an inter-fixings portion (14) extending between first and second said bonding zones succeeding one another in the main direction (X) of said shape memory band is varied locally according to the forces that are to be exerted on the first and second teeth to which said first and second bonding zones are respectively intended to be bonded.

4. The method as claimed in any one of the preceding claims, in which, in step c), one or more regions of the shape memory band is or are heat treated so as to locally reduce the forces exerted on the teeth in the service position, the intensity of the heat treatment of a region of the shape memory band (10) being dependent on the distance, from the incisors of said patient, of the teeth in the vicinity of said region in the service position.

5. An orthodontic appliance comprising a one-piece shape memory band made with a 3D printer, the cross section of which varying according to the longitudinal position of said cross section, and comprising a bonding zone configured so as to exhibit a shape substantially identical to that of a tooth, the variation in cross section along the main direction (X) being progressive over more than 5% of the length of said shape memory band, the variation of the cross section comprising a variation of composition, i.e. a variation:
- of the nature of the material or materials that define the cross section and/or
- of the arrangement of the materials that define the cross section,
and/or the variation of the cross section comprising a variation of shape, i.e. a variation:
- of the contour of the cross section and/or
- of the angular position of the cross section about the main direction (X) of said shape memory band,
no portion of the shape memory band representing more than 5% of the length of the band exhibiting a cross section that is constant,
at least part of the shape memory band being made from a shape memory material.

6. The orthodontic appliance as claimed in the immediately preceding claim, comprising one or more portion(s) in which the cross section varies progressively along the main direction (X), the cumulative length of said portion or portions representing more than 50% of the length of said shape memory band (10).

7. The orthodontic appliance as claimed in the immediately preceding claim, in which the cumulative length of said portion or portions represent more than 90% of the length of said shape memory band (10).

8. The orthodontic appliance as claimed in any one of the three immediately preceding claims, in which the band comprises at least one region made from a material selected from the group formed by nickel-titanium NiTi, CuAlZn and CuNiAl alloys.

9. The orthodontic appliance as claimed in any one of the four immediately preceding claims, comprising fixing portions (11) made of steel and inter-fixings portions (14) made of a shape memory material, said fixing portions and inter-fixings portions succeeding one another in the main direction (X) of the shape memory band.

10. The orthodontic appliance as claimed in any one of the five immediately preceding claims, in which the shape memory band comprises a slot (24) in which a reinforcer (22) can be housed in order to stabilize the shape of said shape memory band, and/or hooks, preferably made of steel, allowing the attachment of intermaxillary elastics.

11. The orthodontic appliance as claimed in the immediately preceding claim, some of said hooks being positioned on a reinforcer and/or in a fixing portion.

12. The orthodontic appliance as claimed in any one of the seven preceding claims, in which said shape memory band is made entirely from NiTi.

13. The orthodontic appliance as claimed in any one of the eight immediately preceding claims, in which the shape memory band comprises at least one portion in which the cross section is continuously variable, said portion extending over more than 20% of the length of said band, and/or in which no portion of the shape memory band representing more than 2% of the length of the band has a cross section that is constant.

14. The orthodontic appliance as claimed in any one of the nine preceding claims, in which each inter-fixings portion defines, on the side that does not face toward the teeth in the service position, a convex exterior surface with no sharp corners.

15. The orthodontic appliance as claimed in any one of the ten preceding claims, produced according to a method as claimed in any one of claims 1 to 4.
